# EUROPÄISCHE PATENTANMELDUNG

(11) **EP 0 802 651 A2**
(43) Veröffentlichungstag der Anmeldung: **22.10.1997**
(21) Anmeldenummer: 97102735.4
(22) Anmeldetag: 20.02.1997
(51) Int. Cl.: H04L 7/10, H04L 7/04, H04L 1/08

(54) **Fehlerrobustes Multiplexverfahren mit möglicher Retransmission**

(30) Priorität: 15.04.1996 DE 19614737
(71) Anmelder: ROBERT BOSCH GMBH, 70442 Stuttgart (DE)
(72) Erfinder: Vogel, Peter, 31139 Hildesheim (DE); Nitsche, Gunnar, Dr., 31139 Hildesheim (DE)

(57) **Zusammenfassung**

Die Erfindung schlägt ein Multiplex-Verfahren mit einer flexiblen Retransmission von Daten vor, wobei ein Teil der Daten ständig neu übertragen wird und von einer möglichen Retransmission ausgeschlossen ist.

## Beschreibung

### Stand der Technik

Die Erfindung geht von einem Verfahren zur Übertragung von Datenblöcken nach der Gattung des Hauptanspruchs aus.

Es ist schon ein Verfahren zur Übertragung von Datenblöcken bekannt, das Protokoll H.22P (ITU-T Study Group 15, LBC 95-276 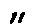 ITU-T Recommendation H.22P")
In diesem Protokoll werden die Rahmenstrukturen, die Formate der Daten- und Steuerfelder und eine Struktur für die vom Multiplexer zu übertragenden Daten, das Multiplexprotokoll, festgelegt. Das Multiplexprotokoll ermmöglicht die Verarbeitung von logischen Informationen, die über die Adaptationsebene auf die Multiplexebene gelangen, in einheitliche Dateneinheiten. Das Protokoll ermöglicht die Übertragung von beliebigen Kombinationen von digitalen Audio und Videodaten oder anderen Informationen über eine Datenleitung und schlägt zur Verhinderung eines Datenverlustes ein spezielles Protokoll vor, das ein Synchronisationsmuster mit 31 Bits Länge aufweist. Ihm wird der HEADER (31 oder 63 bits) und das Informationsfeld mit fester Länge nachgestellt. Das Synchronisationsmuster muß durch eine Korrelationsbedingung im Empfänger erkannt werden, erst dann kann die Verarbeitung der Datenblöcke im Empfänger beginnen.
Bei diesem Verfahren können Datenverluste durch einen Verlust der Synchronisation auftreten. Zudem ist ein nochmaliger Versuch zur Übertragung von fehlerhaften Daten nicht vorgesehen. Auch wird kein Mechanismus vorgestellt, der Datenblöcke fester Länge mit Daten füllt, sollte die Datenquelle keine Daten mehr liefern.

### Vorteile der Erfindung

Das erfindungsgemäße Verfahren mit den kennzeichnenden Merkmalen des Anspruch 1 hat demgegenüber den Vorteil, daß die fehlerhaft gesendete Daten durch eine erneute Übertragung korrigiert werden und daß das Multiplexprotokoll mit den Datenblöcken FIXINFO und RET eine flexible Retransmission von Teilen des Datenblockes erlaubt, bei der bestimmte Daten ständig neu übertragen werden und von der Retransmission ausgenommen sind. Der Verlust von Daten durch fehlerhaftes Demultiplexen wird wesentlich verringert, da die Möglichkeit besteht, fehlerhafte HEADER neu anzufordern.

Durch die in den Unteransprüchen aufgeführten Maßnahmen ist eine vorteilhafte Weiterbildung und Verbesserung des im Hauptanspruch gegebenen Verfahren möglich.

Die Länge des Feldes FIXINFO läßt sich nach Anspruch 2 leicht an die Erfordernisse verschiedener Datenquellen anpassen.

Vorteilhaft ist nach Anspruch 3, daß die im Datenblock FIXINFO gesendeten Daten durch ihre feste Zuordnung besonders sicher und verzögerungsfrei übertragen werden.

Das Feld FIXINFO eigent sich nach Anspruch 4 besonders für Datenquellen, die kontinuierlich übertragen werden sollen.

Nach Anspruch 5 werden die Daten aus FIXINFO sehr sicher übertragen, auch wenn im anschließenden Datenblock Fehler auftreten.

Daher ist es nach Anspruch 6 vorteilhaft, daß die Fehlererkennung sich nicht auf FIXINFO erstreckt.

Sollte einen Datenquelle nicht genügend Daten liefern, werden nach Anspruch 7 die fehlenden Informationen in FIXINFO mit Füllbits aufgefüllt.

Die Ausführungsform nach Anspruch 8 ermöglicht einen einfache Signalisierung von Fehlern in der Datenübertragung im Feld RET mit Hilfe einer Kennung des Fehlerzustandes und der Empfangsnummer des zugehörigen Datenblöckes.

Vorteilhaft ist nach Anspruch 9, daß die Retransmission durch ein 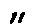 Fehlersignalisierungbit" in RET angemeldet wird. Dadurch wird die Datensicherheit der Übertragung erhöht.

Die Retransmission kann nach Anspruch 10 mit einer kompletten Neusendung des Datenblocks erfolgen.

In manchen Fällen ist es nach Anspruch 11 besser, nur die noch nicht gesendete Redundanz des Datenblocks zu senden..

Zur Verbesserung der gesamten Datenübertragung wird nach Anspruch 12 die Anwendung einer Fehlererkennung und Fehlerkorrektur auf den Datenblock vorgeschlagen.

Besonders effektiv ist das Verfahren nach Anspruch 13, wenn die Inhalte von RET und HEADER zusätzlich über das gesamte Datenpaket verteilt werden.

### Zeichnung

Ein Ausführungsbeispiel der Erfindung ist in der Zeichnung dargestellt und wird in nachfolgender Beschreibung näher erläutert.
Es zeigen:
- Fig 1:: Struktur der Datenebenen für die Multiplexdatenübertragung
- Fig. 2:: Aufbau der Dateneinheit des Multiplexprotokolls

### Beschreibung des Ausführungsbeispiels

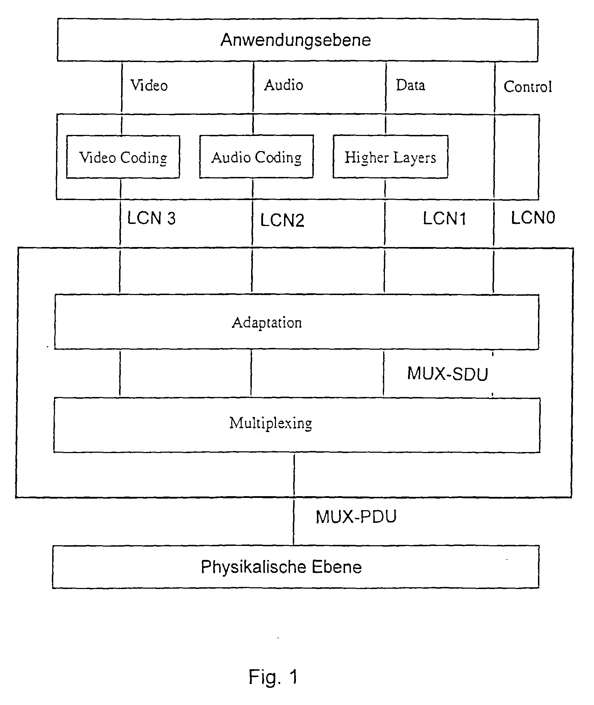

Die Datenübertragung von beliebigen Datensignalen findet nach Fig. 1 über hierarchisch gegliederte Ebenen statt.
Von den einzelen Datengeräten kommen die zum Teil analogen Signale über die Anwendungsebene zur Kodierungsebene. Nach einem Digitalisierungsschritt werden die Inhalte der logischen Kanäle LCN an die Adaptationebene des Multiplexers weitergegeben. Immer noch in getrennten Kanälen werden die Daten als MUX-SDUs (Service Data Units) an die Multiplexebene weitergereicht. Diese Ebene verarbeitet die Vielzahl an Kanälen der verschiedenen Datenquellen zu einem Kanal und gibt MUX-PDUs (Protocol Data Units) aus. Diese Datenblöcke werden nach dem erfindungsgemäßen Protokoll mit Signalen der verscheidenen Quellen gefüllt.

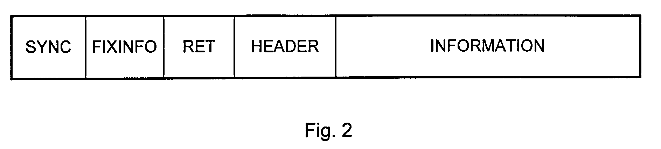

Fig. 2 zeigt ein solches MDX-PDU in der Abfolge der Steuer- und Datenfelder. Das erste Feld SYNC beeinhaltet ein Synchronisationsmuster variabler Länge, das eine klar zu detektierende Bitfolge von, z.B. 31 bit beinhaltet.
Das Synchronisationsmuster wird jedem Datenblock vorangestellt. Als Muster können z. B. Barker- oder Williardsequenzen eingesetzt werden.
Als weiteres Feld folgt FIXINFO. FIXINFO bezeichnet einen optional einstellbaren Datenblock, der nicht im nachfolgenden HEADER spezifiziert werden muß. Für jede Datenquelle kann ein beliebig großer Bereich in diesen Datenblock reserviert werden.
Dieser Datenblock muß anschließend in jedem Datenblock gefüllt und übertragen werden. Der Datenblock ist insbesondere für solche Datenquellen gedacht, die in den meisten (oder allen) Datenblöcken zu übertragen sind. Der Bereich FIXINFO ist ideal für Datenquellen, für die eine Verzögerung z. B. durch Retransmission oder andere Warteverfahren zur Fehlerkorrektur vermieden werden soll. So ist es bei Audiosignalen durchaus akzeptabel, daß einzelne Daten fehlerhaft sind, wenn nur der Datenstrom verzögerungsfrei bleibt oder eine konststante Verzögerung enthält (Interleaving).
Das Feld RET ist ein Kontrollfeld, das z.B. die notwendigen Daten enthält, um eine erneute Übertragung von fehlerbehafteten Daten zu veranlassen.
Im Feld HEADER legt man das Übertragungsschema für den nachfolgenden Informationsblock fest. Ein Beispiel für ein solches Übertragungsschema wird im Protokoll H.223 (ITU-T Study Group 15)beschrieben. Ein solcher HEADER weist z.B. 4 bits auf. Alle 16 Zustände, die der HEADER mit den 4 bits beschreiben kann, sind in einer Tabelle abgelegt. Möchte man z.B. nur Audiosignale übertragen, wird ein bestimmte Bitfolge gesetzt, wird der Informationsblock für Audio- und Videosignale geteilt wird eine andere Bitfolge gesendet.
Im Anschluß folgt das Informationsfeld. Es ist nach den im HEADER festgelgten Regeln für die verschiedenen Datenquellen strukturiert. Das Informationsfeld wird so lange mit Daten gemäß des vom HEADER vorgegebenen Multiplexschema aufgefüllt, bis die Paketlänge n erreicht ist.

Als erster Schritt für eine Datenübertragung muß eine Verbindung aufgebaut werden. Dazu wird ein mit Hilfe eines Kontrollprotokolls die Länge n der Datenblöcke festgelegt. Die Länge n ist für Empfänger und Sender einstellbar, auch zu einem späteren Zeitpunkt. Dazu muß das Kontrollprotokoll in die Übertragung eingreifen und einen Abgleich vornehmen. Der Datenblock FIXINFO wird entweder ebenfalls vor dem Verbindungsaufbau zwischen Sender und Empfänger spezifiziert oder er wird mittels eines speziellen Kontrollprotokolls zwischen Sender und Empfänger festgelegt. Im zweiten Fall ist es möglich, auch während der Verbindung Änderungen am Datenblock vorzunehmen. Das ist z. B. dann sinnvoll, wenn eine Datenquelle keine Daten mehr zu senden hat und der entsprechende Datenbereich nicht mehr benötigt wird.

Da die Rahmenlänge n der Datenblöcke über einen im Kontrollprotokoll festgelegten Zeitraum konstant gehalten werden kann, läßt sich folgende Synchronisationsstrategie anwenden:
Zu Beginn der Übertragung sucht der Empfänger das Synchronisationsmuster. Das Synchronisationsmuster muß nur an den entsprechenden Stellen nach der Länge n gesucht und überprüft werden. Es ist beim Verbindungsaufbau und bei der Sartsynchronisation z. B. von Vorteil, zu Beginn der Übertragung (Verbindungsaufbau mit Hilfe eines Kontrollprotokolls) kürzere Längen für n zu benutzen. Mit Hilfe des Kontrollprotokolls wird dann ein Zeitpunkt festgelegt, ab dem die Länge n geändert wird.

Zur Erkennung des SYNC auf der Empfängerseite der Datenübertragung im Demultiplexer wird eine Mindestanzahl von Bits festgelegt, die zwischen einem Muster im Datenstrom und dem vom Kontrollprotokoll festgelegten Synchronisationsmuster übereinstimmen müssen. Ist dieses Korrelationsminimum erreicht (Korrelationsbedingung), so gilt das Synchronisationsmuster als gefunden. Falls auf diese Weise ein Synchronisationsmuster gefunden wurde, läuft ein Fehlererkennungsverfahren für den HEADER ab. Eine erfolgreicher Aufbau der Synchronisation im Empfänger findet nur statt, wenn zum Synchronistaionsmuster ein fehlerfreier HEADER gefunden wurde. Die Fehlererkennung kann im einfachsten Fall ein Parity-Check sein, wird aber vorzugsweise mit einem CRC-Code durchgeführt. Wurde ein Fehler bei der Übertragung der Daten entdeckt, wird das Synchronisationsverfahren mit der Suche nach dem nächsten Synchronisationsmuster fortgesetzt. In diesem Beispiel muß das SYNC und der dazugehörige fehlerfreie HEADER einmal gefunden werden, um die Startsynchronisation zuwege zu bringen.

Ist das Startsynchronisationsverfahren erfolgreich durchgeführt, wird das nächste Synchronisationsmuster jeweils nach einem kompletten Rahmen der Länge n gesucht. Gleichzeitig läuft ein Zähler mit, der inkrementiert wird wenn das Synchronisationsmuster die Korrelationsbedingung nicht erfüllt und der HEADER nicht fehlerfrei erkannt werden kann. Hat der Zähler einen Grenzwert G2 (ganzzahliger Wert, der vom Kontrollprotokoll festgelegt wird) überschritten, gilt die Synchronisation als verloren und es muß nach obigem Schema neu synchronisiert werden. Typischerweise gilt die Synchronisation nach vier Versuchen als verloren und es erfolgt eine neue Startsynchronisation.

Ist die Startsynchronisation im Empfänger erfolgreich abgelaufen, beginnt die Verarbeitung des Feldes FIXINFO und RET, des HEADERS und der INFORMATION.
Der Datenblock FIXINFO wird dabei ohne Kenntnis des HEADERs und unabhängig von eventuellen Übertragungsfehlern und Fehlerkorrekturstrategien sofort an die entsprechenden Datenquellen weitergeleitet. Ein fehlerfreier HEADER ist zum Demultiplexen dieses Datenblocks nicht notwendig.
Im Restdatenblock, das aus RET, HEADER und INFORMATION besteht, werden Bereiche festgelegt, in denen im Empfänger nach Fehlern gesucht wird (Detektionsbereich). Wird der Detektionsbereich als fehlerhaft erkannt, so ist es möglich, beliebige fehlerkorrigierende Maßnahmen für das Restpaket durchzuführen, z. B. eine Retransmission.
Die für die Retransmission notwendigen Informationen sind im Feld RET enthalten.
Als Beispiel kann für das Feld RET folgende Syntax benutzt werden: Es werden zwei Stationen betrachtet, die beide sowohl Senden als Empfangen können. Jedem Paket wird eine Sendenummer zugeordnet. Zusätzlich wird die Sendenummer des letzten empfangenen Paketes übertragen (Empfangsnummer). Ein weiteres Bit in RET zeigt an, ob das letzte empfangene Paket fehlerhaft oder fehlerfrei empfangen wurde. Diese Empfangsnummer und das Fehlerbit werden vom Empfänger einer Station an den Sender der anderen Station gegeben. Wahlweise können für die Fehlermeldung auch mehrere Bits (Wiederholungscode) benutzt werden. Wird kein Fehler gemeldet, ist die Datenübertragung problemlos. Wird ein Fehlerbit im Feld RET erkannt, so wird das Paketmit der zugehörigen Empfangsnummer erneut übertragen. Das Fehlerbit wird gesetzt, wenn der Empfänger einer Station einen Fehler im HEADER, im INFORMATIONs-Feld oder in einem Teile des RET-Feldes, nämlich der Sendenummer, findet.

### Weitere Ausführungsformen

Ist eine Datenquelle vorübergehend nicht in der Lage, den zugehörigen Datenbereich in FIXINFO komplett mit Daten zu füllen, so muß mit geeigneten Daten, den Füllbits, aufgefüllt werden. Das geschieht nach derselben Methode wie ein Auffüllen des INFORMATIONs-Feldes mit Füllbits.

Bei der Retransmission nach dem oben genannten Ausführungsbeispiel wird im Fehlerfall das Datenblock, bestehend aus RET, HEADER und INFORMATION komplett neu übertragen (ARQ, Typ I). Eine weiter mögliche Ausbildung kommt mit Verfahren zur Anwendung, die lediglich Redundanz neu anfordern (ARQ, Typ II).

Zusätzlich zu den bereits beschrieben Übertragungsmethoden ist es möglich, FEC-Verfahren (Forward Error Correction) als weiteren Fehlerschutz für die Blöcke FIXINFO, RET, HEADER, INFORMATION einzusetzen.

Zusätzlich dazu können RET und der HEADER über das Datenblock verteilt angeordnet werden (Interleaving).

## Patentansprüche

1. Verfahren zur Datenübertragung mittels Datenblöcken zwischen zwei Stationen, wobei die Datenblöcke ein Synchronisationsmuster SYNC, einen HEADER und einen INFORMATIONS-Feld aufweisen, wobei das Synchronisationsmuster SYNC den Beginn des Datenblockes anzeigt und der HEADER Steuerzeichen für die Behandlung des nachfolgenden INFORMATIONS-Feldes enthält, dadurch gekennzeichnet, daß ein Feld FIXINFO und eventuell ein Retransmissions-Kontrollfeld RET definiert werden, wobei Teile des Datenblocks im Feld FIXINFO ständig neu übertragen werden und nicht im HEADER spezifiziert werden müssen und RET die mögliche Retransmission von Teilen des Datenblocks steuert.

2. Verfahren zur Datenübertragung mittels Datenblöcken zwischen zwei Stationen nach Anspruch 1, dadurch gekennzeichnet, daß die Länge des Feldes FIXINFO einstellbar ist und vorzugsweise von einem Kontrollprotokoll gesteuert wird.

3. Verfahren zur Datenübertragung mittels Datenblöcken zwischen zwei Stationen den Ansprüchen 1 und 2, dadurch gekennzeichnet, daß der Datenbereich einer beliebigen Datenquelle in FIXINFO vom Kontrollprotokoll festgelegt werden kann.

4. Verfahren zur Datenübertragung mittels Datenblöcken zwischen zwei Stationen nach den Ansprüchen 1 bis 3, dadurch gekennzeichnet, daß FIXINFO Informationen von Datenquellen enthält, die keiner Verzögerung bei der Übertragung unterliegen sollen.

5. Verfahren zur Datenübertragung mittels Datenblöcken zwischen zwei Stationen nach den Ansprüchen 1 bis 4, dadurch gekennzeichnet, daß FIXINFO weiter verarbeitet wird, auch wenn im anschließenden Datenblock Fehler auftreten.

6. Verfahren zur Datenübertragung mittels Datenblöcken zwischen zwei Stationen nach den Ansprüchen 1 bis 5, dadurch gekennzeichnet, daß eine Fehlererkennung auf Empfängerseite für die mögliche Retransmission sich nur die Felder RET, HEADER und INFORMATION erstreckt.

7. Verfahren zur Datenübertragung mittels Datenblöcken zwischen zwei Stationen nach den Ansprüchen 1 bis 6, dadurch gekennzeichnet, daß FIXINFO, sollte die Datenquelle keine Daten mehr senden, mit Füllbits aufgefüllt wird.

8. Verfahren zur Datenübertragung mittels Datenblöcken zwischen zwei Stationen nach Anspruch 1, dadurch gekennzeichnet, daß RET eine Sendenummer und Informationen über die Nummer des letzten oder vorhergehend empfangenen Pakets und seines Fehlerzustandes enthält.

9. Verfahren zur Datenübertragung mittels Datenblöcken zwischen zwei Stationen nach Anspruch 8, dadurch gekennzeichnet, daß RET mindestens ein 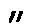 Fehlersignalisierungsbit" enthält, das, wenn es gesetzt ist, eine Retransmisson der Daten mit der vom RET festgelegten Empfangsnummer anmeldet.

10. Verfahren zur Datenübertragung mittels Datenblöcken zwischen zwei Stationen nach den Ansprüchen 7 bis 8, dadurch gekennzeichnet, daß die Retransmission nach Fehlererkennung und Setzen des Fehlerbits komplett erfolgt.

11. Verfahren zur Datenübertragung mittels Datenblöcken zwischen zwei Stationen nach den Ansprüchen 7 bis 8, dadurch gekennzeichnet, daß die Retransmission nach Fehlererkennung und Setzen des Fehlerbits redundant erfolgt.

12. Verfahren zur Datenübertragung mittels Datenblöcken zwischen zwei Stationen nach den Ansprüchen 1 bis 11, dadurch gekennzeichnet, daß für FIXINFO,RET,HEADER und INFORMATION Fehererkennung- und Fehlerkorrekturverfahren angewendet werden.

13. Verfahren zur Datenübertragung mittels Datenblöcken zwischen zwei Stationen nach Anspruch 12, dadurch gekennzeichnet, daß RET und HEADER über den gesamten Datenblock verteilt angeordnet werden (Interleaving).
